# EUROPEAN PATENT APPLICATION

(11) **EP 2 012 091 A1**
(43) Date of publication of application: **07.01.2009**
(21) Application number: 08158696.8
(22) Date of filing: 20.06.2008
(51) Int. Cl.: G01C 21/36, G06Q 10/00, G06Q 30/00

(54) **Methods and apparatus for dynamic subscription binding**

(30) Priority: 20.06.2007 US 765910
(71) Applicant: THE BOEING COMPANY, Chicago, IL 60606-2016 (US)
(72) Inventor: Knapp, Robert William, Denver, CO 80211 (US)
(74) Representative: Howson, Richard G.B.

(57) **Abstract**

A method for dynamic management of subscription based data for a fielded system (20) utilizing a remote computer system (40) is described. The method comprises providing unique identification data for the fielded system to the remote computer system, receiving user identification data at the remote computer system, and determining (80), at the remote computer system, from at least one of the unique fielded system identification data and the user identification data, if the fielded system is bound to a set of subscription based data, or if the fielded system is available to be bound to a set of subscription based data.

## Description

### BACKGROUND OF THE INVENTION

This invention relates generally to navigation data subscription services to which operators of aircraft subscribe, and more specifically, to methods and apparatus for dynamic subscription binding for such navigation data subscription services.

Charts of navigation data, or subscriptions, are typically sold to individual general aviation operators, business aviation companies, and commercial aviation companies on a subscription basis. Traditionally these were paper based products, but as computing power has increased, both generally and in aircraft systems, these subscriptions have been transitioned into electronic products as software.

As navigation data came to be stored in an electronic format, it also became possible to distribute periodic updates of the navigational data charts using one or more types of automated distribution. Electronic representations of navigational data has also resulted in the relatively easy division of the navigational data into subsets. For example, rather than buying a subscription that is necessarily an entire area of the country, such as the southwestern USA, the user may wish to utilize data that is more tailored to their particular flight route. Should a need arise to expand the user's subscription, for example, due to a diversion to an airport that is not included within their subscription, it can be done dynamically once they land at an airport. This subscription expansion (and compression) capability is convenient for a user because they do not have to maintain the expense associated with an "oversubscription" which includes navigational data that the user does not utilize.

Currently, the above mentioned navigation data subscriptions are typically "tied" to a third party system, for example, an original equipment manufacturer's embedded system that is present in an aircraft. When attempting to utilize their subscriptions, users have to enter a security code, or make some other type of manual data entry for subscription security into the third party system, as part of a subscription management process. However, non-subscribing users attempting to access navigational data from a third party system are also prompted to enter a security code, which presumably they do not have, when attempting to utilize navigation data illicitly.

### BRIEF DESCRIPTION OF THE INVENTION

In one aspect, a method for dynamic management of subscription based data for a fielded system utilizing a remote computer system is provided. The method includes providing unique identification data for the fielded system to the remote computer system, receiving user identification data at the remote computer system, and determining, at the remote computer system, from at least one of the unique fielded system identification data and the user identification data, if the fielded system is bound to a set of subscription based data, or if the fielded system is available to be bound to a set of subscription based data.

In another aspect, a computer is provided that is programmed to determine, from received data associated with a fielded system and received data identifying a user, if the fielded system is bound to a set of subscription based data or available to be bound to a set of subscription based data. The computer is additionally programmed to deny provisioning of subscription based data to the fielded system until the fielded system is determined to be available to bound, and upon determining the fielded system is available to be bound, create a subscription installation identifier that binds a set of subscription based data to the fielded system and the user and generate a set of subscription based data that is associated with the subscription installation identifier.

In still another aspect, a system for dynamic management of subscription based data utilized in fielded systems is provided. The system includes a fielded system, a user computer coupled to a network and configured to receive data from and provide data to the fielded system, and a back office system. The back office system is programmed to dynamically associate and disassociate subscription based data with the fielded system based on data received from the fielded system via the user computer and the network.

The features, functions, and advantages that have been discussed con be achieved independently in various embodiments of the present invention or may be combined in yet other embodiments further details of which can be seen with reference to the following description and drawings.

### BRIEF DESCRIPTION OF THE DRAWINGS

Figure 1 is a flow diagram illustrating various aspects of a dynamic subscription binding process for a newly fielded system.

Figure 2 is a flow diagram illustrating generation and transfer of subscription data for reprovisioning into a different embedded system.

Figure 3 is a functional flow diagram illustrating a subscription utilization process.

Figure 4 is a flowchart illustrating a subscription management process for comparing installation identifiers in a fielded system and in a removable media device.

Figure 5 is a flowchart illustrating a process for determining if navigational data set within a removable media device is bound to a fielded system.

### DETAILED DESCRIPTION OF THE INVENTION

The methods and apparatus described herein enable a procedure where an end-user (e.g., a paying customer), of subscription-based navigational data does not have to participate in subscription management or data security when accessing the navigation data products to which they have subscribed. Conversely, unauthorized users attempting to access such navigational data products will be prompted to address such subscription security issues. Since unauthorized users should not be in possession of valid security codes, these unauthorized users should not be able access any of the subscription-based navigation data, without first subscribing to the data.

As mentioned above, subscribers are able to expand (and contract) the navigational data services to which they subscribe. However, the navigational data associated with such subscriptions are updated on a periodic (e.g., monthly) basis. One relatively new data transfer system provides such navigational data updates when an airplane lands at an airport by establishing a data link between the airplane and a fixed based operator (FBO). In this scenario, the FBO detects that the airplane is at the airport, and the user determines whether they wish to get updates to their current subscription at that time. Navigational data, and subsequent updates, are typically stored in a number of aircraft systems, which are collectively referred to herein as avionic devices. One example of an avionic device that might utilize navigation data is an electronic flight display (EFD).

To properly update the navigational data for a particular user, the provider of such navigational data utilizes the disclosed methods and apparatus, at least in part, as a mechanism for validating items such as aircraft avionic configurations, types of subscriptions, and geographic areas that are covered by a subscription. While it is intuitive that an aircraft has one user, one navigational data subscription, and updates to that subscription are loaded onto the avionics in a particular way, the methods and apparatus described herein take into account that an aircraft may be shared by a plurality of users having various navigational data subscriptions. Another scenario is that a user may wish to utilize their subscription in more than one aircraft (shared for example by a flying club), and rather than taking a physical device from aircraft to aircraft or requiring everybody in the club to have the same subscription, the methods and apparatus provide a better capability for users to move their subscription-based navigational data from device to device.

As mentioned above, users and/or pilots are currently involved in subscription security. For example, to utilize a navigational data subscription or receive an update to the navigational data subscription, the user/pilot has to enter a serial number, a coverage code, or get on the phone with customer service and be involved somehow in exchanging encryption keys or other codes to allow access to or updates of the subscription-based navigational data product. However, the described embodiments provide a mechanism where subscription verification for navigational data access and updates is accomplished behind the scenes, at least for authorized users (users having a current subscription). The described process is an improvement because the authorized user/pilot is not involved with subscription security, while at least the same level of subscription security is provided to the subscription provider as when the user/pilot was involved. The benefits are that demands on authorized users/pilots, customer service of the subscription provider, data entry error rates, and user discontentedness rate are decreased.

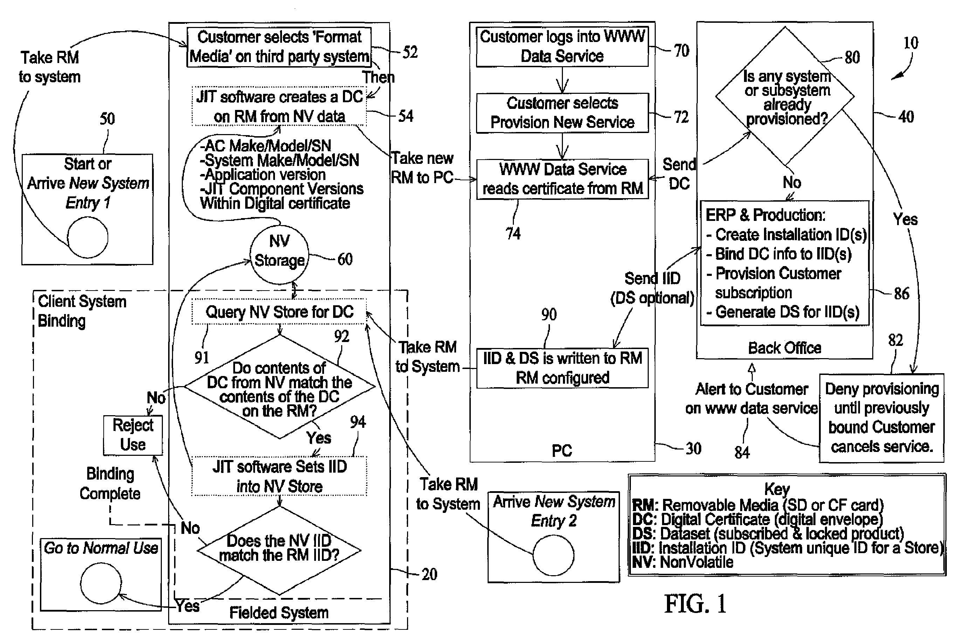

In one embodiment, the provider of subscription based navigational data to aircraft operators receives an order from a customer, who indicates a desire to subscribe to a navigational data service which will be utilized in conjunction with a new avionic device. The particulars associated with such an order are entered into a system, for example an Oracle system, where they are saved as a new subscription, as further described below with respect to Figure 1.

Figure 1 is a functional flow diagram 10 that illustrates a dynamic subscription binding process for a newly fielded system 20, sometimes referred to as an embedded system. An example of a fielded system 20 is an avionic device, which is sometimes referred to as a line replaceable unit (LRU), that is or will be installed into an aircraft. A further example is an LRU that provides a navigation function within an aircraft through utilization of navigational data that is subscription based, and bound to a system, or aircraft. Systems such as fielded system 20 are typically shipped from a manufacturer, and include software loaded thereon which is referred to herein as an integration toolkit (IT), the function of which is described below. Subscription binding of, for example, navigational software to a fielded system 20 is accomplished using a personal computer (PC) 30, and a back office system 40, as illustrated in Figure 1.

Now referring specifically to Figure 1, when a new fielded system 20 is delivered 50 to a customer, the customer will typically subscribe to a subscription based data service, such as one that provides navigational data, to be loaded into a memory of the fielded system 20. To begin the subscription process, the customer utilizes a removable media device, which is formatted 52 by the fielded system 20 (a third party system, for example) and the integration toolkit running thereon. After formatting 52 the removable media, the integration toolkit software running on the fielded system 20 creates 54 a digital certificate that is stored within the removable media. The digital certificate, in various embodiments, includes one or more of an aircraft make, model, and serial number, a make, model, and serial number for the fielded system 20, a version of the application that is to utilize the subscription based data, and component versions of the integration toolkit, as copied from the non-volatile storage 60 of fielded system 20. Creation of the digital certificate essentially binds the removable media to the aircraft.

During creation of a new subscription, a navigational data packet for the subscribing user, is not yet bound to a fielded system 20. Once the digital certificate is created, the user removes the removable media from the system 20 to be fielded and inserts it into a computer such as PC 30. At the computer, the user logs in 70 to a data service, typically internet based, for the entity that supplies the subscription based data. The customer selects 72 the one or more data subscriptions to which they wish to subscribe, referred to in the Figure as provisioning, and the internet based data service reads 74 the digital certificate from the removable media.

The digital certificate is then sent to a back office system 40 of the subscription based data supplier. The back office system contains the subscription based data to which a user is attempting to subscribe, an example of which is navigational data. The back office system then determines 80 if the fielded system 20 has been provisioned. If the fielded system 20 is determined 80 to already have been bound to a subscription, provisioning to the new subscription is denied 82 until the user cancels the previous subscription. An alert indicating the previous binding is then sent 84 to the user via PC 30. If the fielded system 20 has not been previously provisioned, the back office system 40 creates a subscription installation identifier (IID), and binds the digital certificate information to the newly created subscription IID. The subscription is provisioned 86 and a subscription data set (DS), including for example, the navigational data, is generated utilizing a server, the navigational data being further bound to the subscription IID. Once the back office system 40 completes these tasks, the subscription IID, the digital certificate, and the subscription data set are sent to the PC 30, where it is written 90 to the removable media. The user then removes the removable media from the PC 30, and reinserts it into the fielded system 20.

To provide client system binding, once the removable media is inserted into the fielded system 20, the installation toolkit queries 91 the nonvolatile memory for the digital certificate stored therein, and the digital certificate from the nonvolatile memory 60 is compared 92 to the digital certificate in the removable media. If they match, the installation toolkit then sets 92 the subscription IID within the nonvolatile memory 60 of the fielded system 20, and loads the subscription data set. Once the subscription IID is written to the nonvolatile memory 60, it is then referred to as a system IID. A final comparison verifies that the subscription IID and the system IID match 96. If they do, the binding of the fielded system 20 to the subscription based data set is now complete and the subscription based data can be utilized by the fielded system 20. If the comparison of the digital certificates or of the IIDs do not result in a match, the fielded system will not store, or respectively will not be allowed to utilize the subscription based data set.

In the case where the subscription base data is navigational data, order information received from PC 30, includes Oracle subscription data and aviation extract data. This data is received by back office system 40 which operates according to a set of business rules. The back office system 40, which is sometimes referred to as a data server converter, is configured to create a set of data, or data set, relating to a customer's desired navigational data subscription. This data set includes information about the state of the data set, software for managing the load of the navigational data onto fielded system 20, as well as software configured to bind the navigational data to the fielded system 20 onto which the navigational data is loaded.

For example, during creation of a new subscription, the packet of navigational data for the subscribing user, is not bound to a system. The packet of data also includes a discrete and unique number therein, the installation identifier (IID) and another field that is referred to as a binding status. The packet of data is capable of being downloaded to the customer's PC 30 and stored in a memory, for eventual transfer to the removable media which is utilized to upload the subscription data set onto fielded system 20, as described above. It should be noted that loading of the files onto the removable media may include one or more implemented security mechanisms, for example, a proprietary dynamic file spacing system which effectively prevents copying of the navigational data from the removable media by an unauthorized user. It should also be noted that removable media is but one example embodiment for the loading of navigational data, and it should be understood that any number of systems, including wireless systems, could be utilized to transfer subscription data from back office 40 to fielded systems.

When loading subscription-based navigational data sets onto a new embedded system, such as fielded system 20, that has not been programmed with a specific navigational data subscription, initialized navigational data set files are transferred from a server (back office system 40) to a portable storage device such as a removable media device. The data set files are unbound files that have been initialized on the server. At this time and in one embodiment, a dynamic file spacing system is incorporated into the data set files to prevent copying. As described above, the removable media is subsequently inserted into the new fielded system 20 for transfer and eventual deployment as a source of subscription-based navigational data. Therefore, as the navigational data set is a new installation, or load, the installation ID in the fielded system 20 should be zero, which is sometimes referred to as NULL, or some other predefined number, to verify that the fielded system 20 is currently an inactive piece of equipment.

In the field of avionics, individual LRUs are sometimes sold by their owners, for example, when an aircraft owner determines to upgrade their suite of avionics. Therefore there is a market in used avionic hardware, including hardware devices that utilize subscription based data. Such aftermarket activity is not unique to avionics, but for ease of description, avionics aftermarket activity is utilized as the descriptive example.

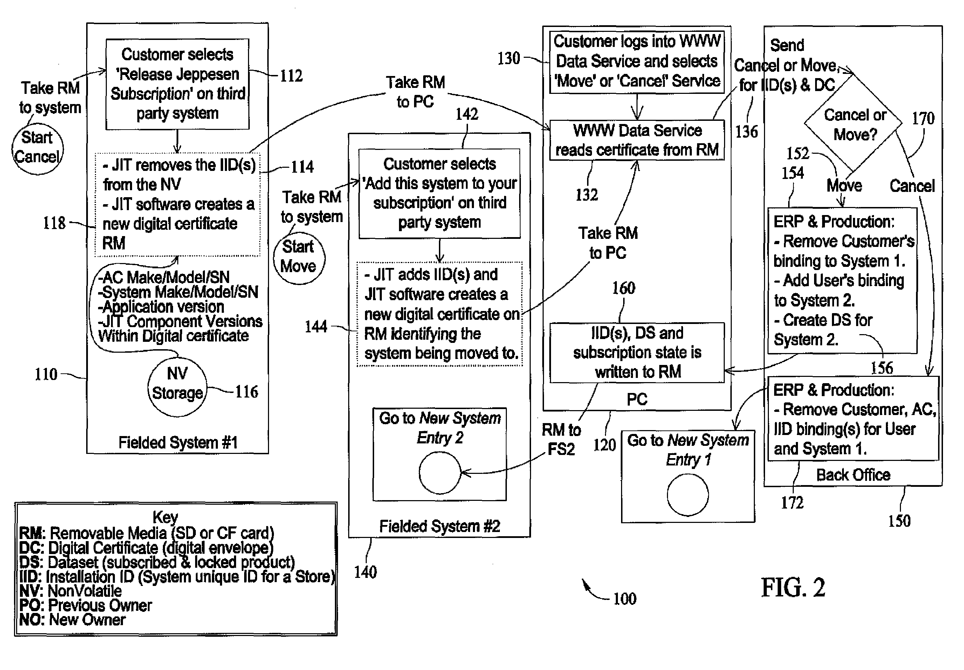

Continuing the example, when a user purchases a used avionic device, they will likely need to change the subscription based data stored therein. Such a process is sometimes referred to herein as moving of a fielded system, or repurposing a fielded system. Figure 2 is a functional flow diagram 100 that illustrates a repurposing process for a fielded system 110 utilizing a PC 120 and a back office system 130.

Now referring specifically to Figure 2, when "ownership" of a first fielded system 110 is being changed, the "new" customer will typically need to subscribe to a subscription based data service, such as one that provides navigational data. The data for such a service is typically loaded into the memory of the first fielded system 110. To begin the subscription process, the system being moved will have removable media inserted, at which point the user will select 112 a "release subscription" option. The above described integration toolkit, resident in the first fielded system 110, will operate to remove 114 the system installation ID from the non-volatile storage 116 in the first fielded system 110 and create 118 a new digital certificate that will eventually be associated with the first fielded system 110 when it is redeployed.. This digital certificate is stored on the removable media. As above, the digital certificate, in various embodiments, includes one or more of an aircraft make, model, and serial number, a make, model, and serial number for the first fielded system 110, a version of the application that is to utilize the subscription based data, and component versions of the integration toolkit, as copied from the non-volatile storage 116 of first fielded system 110.

The removable media is then taken to PC 120 as illustrated. At the computer, the user logs in 130 to an internet based data service for the entity that supplies the subscription based data and selects to move or cancel the data subscription. The internet based data service then reads 132 the digital certificate from the removable media.

A second fielded system 140, is illustrated as being prepared for receiving the subscription that has been bound to the first fielded system 110. When removable media is inserted into second fielded system 140, the customer selects 142 to add the second fielded system 140 to their subscription. Then the installation toolkit within the second fielded system 140 creates 144 a new digital certificate on the removable media identifying the second fielded system 140. The removable media is then moved to the PC 120.

The digital certificate, and the selection of "move" or "cancel" is then sent 136 to back office system 150 of the subscription based data supplier from the various removable media. The back office system 150, for a move selection 152, removes 154 bindings stored therein that bind the subscription to the user and first fielded system 110, and binds the subscription to the second fielded system 140 and user, including the one or more bindings between customer, aircraft identification, and installation ID. The back office system 150 then creates 156 a data set for utilization in second fielded system 140. As the user operates to move their subscription, the subscription installation ID and the data set are written 160 to the removable media at the user PC 120. The user (new owner) then removes the removable media from the PC 120. The user then has a valid subscription stored in the removable media, bound to the second fielded system or aircraft, but not yet loaded thereon. Should the user choose to load the subscription into the second fielded system 140, the installation toolkit within the second fielded system 140 operates to configure the second fielded system 140 with the subscription based data as described above with respect to Figure 1. For a selection of canceling 170 the subscription, the back office system 150, removes 172 bindings stored therein that bind the subscription to the first fielded system 110.

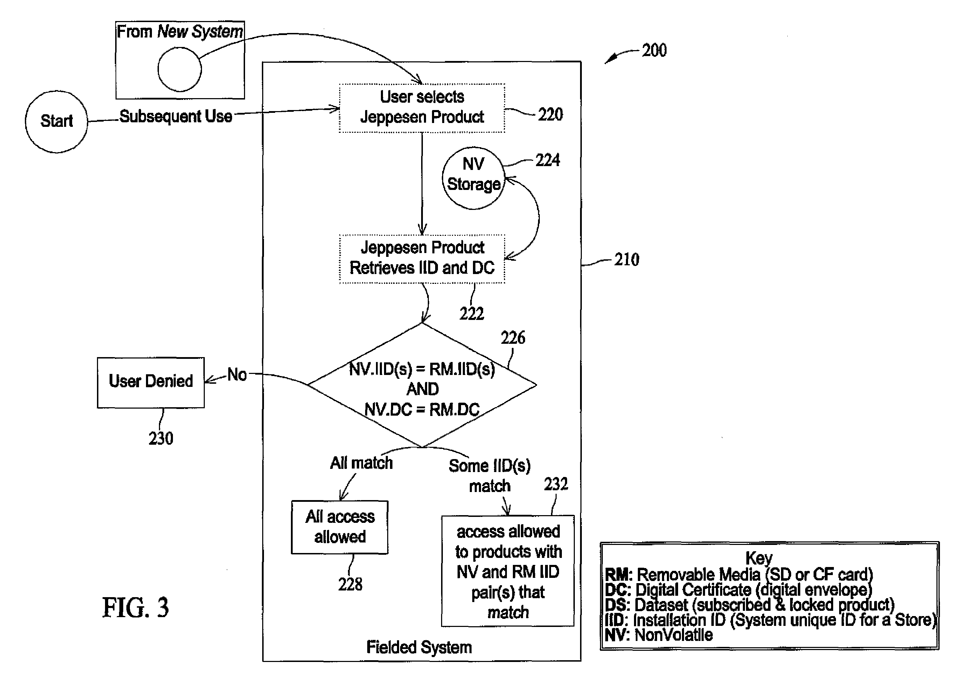

Figure 3 is a functional flow diagram 200 illustrating a subscription utilization process which is initiated in a fielded system 210, which includes non-volatile storage 212, the fielded system 210 being bound to a subscription and having a system installation identifier, loaded as described with respect to Figure 1. As the fielded system 210 is started, the user selects 220 the subscription based product, such as a navigation product, that they wish to use. The system installation identifier and/or digital certificate are retrieved 222 from nonvolatile storage 224 and are compared 226 to a subscription installation identifier and/or digital certificate stored in the removable media. If all the comparisons result in matches, access to the subscription based data is allowed 228. If none of the comparisons results in matches, access to the subscription based data is denied 230. If some of the system and subscription installation IIDs match, access is allowed 232 to the data sets associated with the matching installation identifiers.

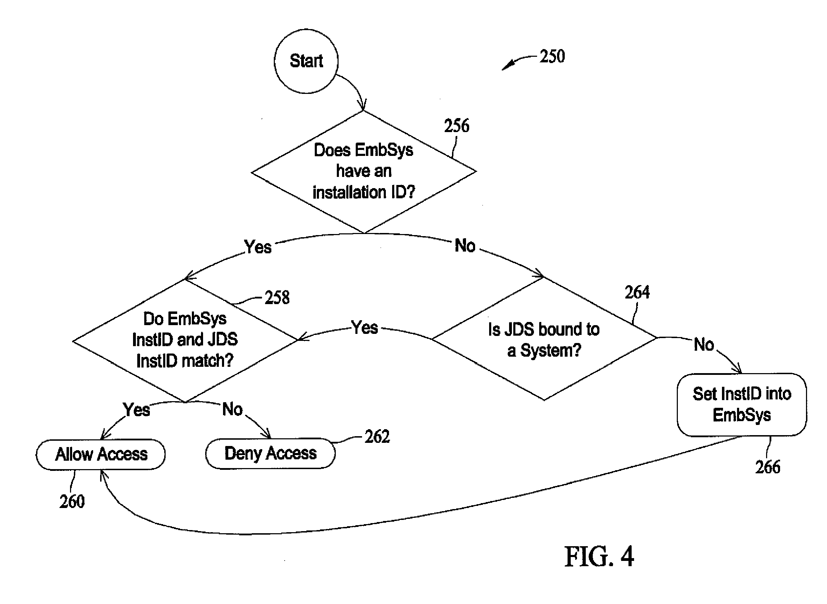

Figure 4 is a flowchart 250 illustrating a subscription management process which is initiated as removable media is brought into communication with a fielded system, such as fielded system 210 (shown in Figure 3), and referencing the comparison 226. The software associated with the data set in the removable media is configured to determine 256 if the fielded system 210 has a system installation ID. If so, it is next determined 258 whether the fielded system installation ID (EmbSys InstID) and a subscription installation ID (JDS InstID) within the removable media match. If they do match, the user, or more specifically the fielded system 210, is allowed to access 260 the data set and/or update the embedded system with updates included within data set, otherwise access to the data set within the removable media is denied 262.

If it was determined 256 the embedded system does not have a system installation ID, it is next determined whether the data set within the removable media is bound 264 to a different fielded system (an embedded system other than fielded system 210). If the data set is bound, the system installation ID from the nonvolatile memory and the subscription installation ID from the removable media are checked for a match as described above. If the data set is not bound to a fielded system, the installation ID for the data set is set 266 within the fielded system 210 as the embedded system installation ID. Reviewing the above, if the state of the data set is unbound, the software package asks the fielded system 210 to provide the installation ID last provided to it. If that installation ID is different than the subscription installation ID, the software package checks the binding state of the database at 264.

In addition to the aftermarket example given above, individual LRUs, or avionic devices, are sometimes removed from an aircraft due to failure. Under this scenario, the LRU is replaced, but the replacement LRU will not include any of the subscription based data or the installation identifier as described above. Therefore for a replacement LRU, there is a need to utilize any subscription based data associated with that type of LRU, even though a different LRU of that type may have been previously bound to the subscription based data.

When a fielded system is being swapped out due to a failure of the system, the customer will typically need to move their data subscription, such as one that provides navigational data. One process for moving the data subscription utilizes a configuration module which is continuously attached to the aircraft, but also connectable to the fielded system. The configuration module includes the installation identifier and the data set associated with a particular subscription, thereby allowing replacement of failed systems, while still retaining the benefits of the subscription based data service.

After the fielded system is replaced due to a failure, and the configuration module is attached to the replacement fielded system, the user is once again able to select 390 the subscription based product, such as a navigation product, that they wish to use. The installation toolkit causes the system installation identifier and data set to be copied from the configuration module to the nonvolatile memory. Then the system installation identifier is retrieved from the nonvolatile memory and compared to the subscription installation identifier stored in the removable media. If they match, access to the subscription based data is allowed, otherwise it is denied.

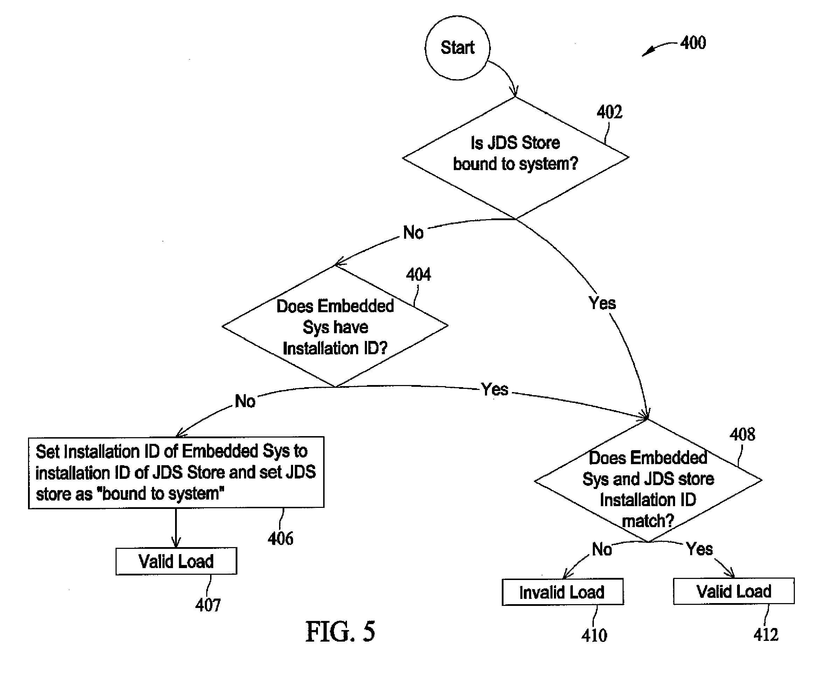

Figure 5 is a flowchart 400 illustrating steps involved with determining if a fielded system has been previously provisioned, or more specifically, if the navigational data set within the removable media is bound 402 to a fielded system. If not, it is then determined 404 whether the fielded system has a system installation ID. If the answer to both of these determinations is no, then the software causes a subscription installation ID (JDS store) associated with the navigational data set to be loaded 406 into the fielded system 206 as the system installation ID of the fielded system, then the navigational data set is validly loaded onto the fielded system. Additionally, the software undertakes an action setting the data set as being bound to the fielded system and validly loaded 407.

If the answer to one or both of the above determinations 402 and 404 is yes, the software determines 408 if the installation IDs of the fielded system (system installation ID) and the navigational data set match. If not, navigational data within the fielded system is invalidly loaded 410. If there is a match, however, the navigational data set load is validly loaded 412.

After the installation ID is loaded into the fielded system , the navigational data is now bound to that number, and the installation ID cannot be changed without authorization. The software also makes changes within the removable media, indicating that the successfully loaded data set is now bound to a particular fielded system and/or aircraft. Specifically, if a user attempts to utilize the removable media to load subscription-based navigation data from the system to which it is bound, for example, load a navigational data set 110 into another fielded system, the software will provide an indication that the navigational data set is already bound, regardless of what the serial number is, and is therefore unable to set an installation ID and serial number within another fielded system.

In a practical example, by having predefined pools of numbers and through the utilization of removable media for the distribution of data sets to fielded systems and aircraft, temporary access to world-wide data sets can be provided. For example, an installation ID of 100,000 could be utilized for aircraft in transit between sale and purchase. Temporary access to such an installation ID for transport might be utilized to provide worldwide coverage for one week. After the week is completed, the system is configured to indicate the installation ID is only good for so many additional days, and that the fielded system is available for a new data set installation, or load.

One result of the above processes is that a user (paying customer) is not prompted with subscription security inputs for the data sets to which they have subscribed, while an unauthorized user is prompted with subscription security inputs.

The above described processes provide a further benefit by enabling other functionalities as described below. Since the state of the database and the installation ID are tracked, it is possible to maintain a list of installation IDs on the aircraft and on a particular removable media device so that rather than disallowing usage of the navigational data, all the different aircraft into which a particular removable media device is inserted is tracked. Under such a scenario, when a navigational data update to get the next cycle of data is distributed, the user is billed for the number of aircraft into which they have inserted their removable media. Utilization of removable media devices and other distribution devices enables a dialog with the data servers (the back office systems 40 and 130 described above), in which the number of installations for a particular navigation data set can be monitored.

The above described navigational data subscription security embodiments are also utilized to guide a non-authorized user, attempting to use the navigational data set, to become an authorized user. For example, the non-authorized user is prompted with contact information for the navigational data service provider, enabling them to become an authorized user, should they so choose.

In addition, if an avionic device includes a navigational data set, and is associated with a first aircraft, moving the avionic device to another aircraft results in a prompt that the data set needs to be registered with the second aircraft before it can be utilized with the second aircraft. Such embodiments, prevent copying between aircraft and properly registered users do not have to enter any subscription keys or serial numbers. Such rules are easily expanded for a user having a large number of aircraft and multiple navigational data product subscriptions. Additionally, the described systems allow the provider of navigational data sets to enable moving of a subscription, between multiple aircraft, as long as the subscription is active in only one aircraft at a time. Note that subscription moving (one aircraft at a time) is different than subscription sharing (multiple aircraft).

While the described embodiments are sometimes described in terms of a navigation application with respect to aircraft, it should be clear that such systems and methods are applicable to marine navigational data subscriptions and any type of land vehicle navigational data subscriptions. Additionally, the embodiments described herein are easily extendible to any type of system that utilizes data subscriptions and periodic updates to those subscriptions. As such, the embodiments are not limited to subscription data utilized for navigation.

As described above, the embodiments disclosed herein provide the benefits that registered users are no longer involved with subscription security mechanisms associated with navigational data sets. Such a mechanism obviously reduces customer inconvenience, data entry errors, and the demands on the customer service aspect of the business of the supplier of navigational data.

While the invention has been described in terms of various specific embodiments, those skilled in the art will recognize that the invention can be practiced with modification within the spirit and scope of the claims.

## Claims

1. A method for dynamic management of subscription based data for a fielded system (20) utilizing a remote computer system (40), said method comprising:
providing unique identification data for the fielded system to the remote computer system;
receiving user identification data at the remote computer system; and
determining (80), at the remote computer system, from at least one of the unique fielded system identification data and the user identification data, if the fielded system is bound to a set of subscription based data, or if the fielded system is available to be bound to a set of subscription based data.

2. A method according to Claim 1 wherein determining (80) if the fielded system (20) is bound or available to be bound further comprises at least one of:
determining if the user wants to cancel the subscription to a first set of subscription based data, thereby unbinding the first set of subscription based data from the fielded system;
determining if the fielded system is to be bound to a set of subscription based data; and
determining if a set of subscription based data is being transferred from a first fielded system to a second fielded system.

3. A method according to Claim 1 wherein upon determining the fielded system (20) is bound to a set of subscription based data, said method further comprises denying (82) provisioning of a second set of subscription based data until the user cancels the binding between the first set of subscription based data and the fielded system.

4. A method according to Claim 1 wherein upon determining the fielded system (20) is available to be bound, said method further comprises:
creating a subscription installation identifier that is associated with the unique fielded system identification data;
retrieving a set of subscription based data from a database, the data in the subscription based on user input received at the remote computer system; and
associating the set of subscription based data with the subscription installation identifier.

5. A method according to Claim 4 further comprising:
comparing, at the fielded system (20), the unique fielded system identification data with identification data within the fielded system; and
storing the subscription installation identifier in the fielded system as a system installation identifier if the received and stored fielded system identification match.

6. A method according to Claim 5 further comprising at least one of storing the subscription based data within the fielded system (20), storing the subscription based data within a sub-system communicatively coupled to the fielded system, and storing the subscription based data in a media device communicatively coupled to the fielded system.

7. A method according to Claim 5 wherein storing the subscription installation identifier comprises receiving the subscription installation identifier at the fielded system (20) from at least one of a removable media device, a wireless device and a wired device.

8. A method according to Claim 2 wherein upon determining a subscription to subscription based data is being transferred from a first fielded system (110) to a second fielded system (140), said method further comprises:
removing (114) a system installation identifier from a memory (116) of the first fielded system; and
providing (118) unique identification data for the first fielded system;
storing data that indicates the subscription is being transferred from the first fielded system;
providing (144) unique identification data for the second fielded system to the remote computer system;
creating a subscription installation identifier for the second fielded system; and
associating the subscription formerly associated with the first fielded system with the second fielded system with the subscription installation identifier for the second fielded system.

9. A method according to Claim 1 wherein providing unique identification data for the fielded system (20) to the remote computer system (40) comprises:
utilizing a software tool to create (54) a digital certificate that includes the unique identification data for the fielded system;
storing the digital certificate on a removable media device; and
communicatively coupling the removable media device to the remote computer system;
receiving the digital certificate and user identification data at the remote computer system; and
determining if the unique identification data for the fielded system in the digital certificate and user identification data match (96) a binding between a user, a fielded system, and a set of subscription based data stored at the remote computer system.

10. A method according to Claim 1 wherein upon determining the user wants to cancel (170) the subscription to a first set of subscription based data, said method further comprises:
removing a system installation identifier from a memory (60) of the fielded system (20);
creating (54) unique identification data for the first fielded system that indicates no subscription based data is bound to the fielded system;
storing data that indicates the subscription is being canceled for the fielded system;
receiving the unique identification data, the user identification data, and the data indicative of the subscription cancellation at the remote computer system; and
operating the remote computer system to remove bindings between at least a copy of the subscription installation identifier stored in the remote computer, the user, and the fielded system.
